# EUROPEAN PATENT SPECIFICATION

(11) **EP 3 974 824 B1**
(45) Date of publication and mention of the grant of the patent: **19.11.2025**
(21) Application number: 19943938.1
(22) Date of filing: 05.09.2019
(51) Int. Cl.: G01N 29/265, G01N 29/04, G01N 29/22

(54) **ULTRASONIC FLAW DETECTION METHOD**
VERFAHREN ZUR ULTRASCHALLFEHLERDETEKTION
PROCÉDÉ DE DÉTECTION DE DÉFAUTS PAR ULTRASONS

(43) Date of publication of application: 30.03.2022
(73) Proprietor: Mitsubishi Heavy Industries, Ltd., Tokyo 100-8332 (JP); Mitsubishi Heavy Industries Machinery Systems, Ltd., Kobe-shi, Hyogo 652-8585 (JP)
(72) Inventor: KOMOTO, Junpei, Tokyo 100-8332 (JP); NAKAMURA, Tomoya, Kobe-shi, Hyogo 652-8585 (JP); UEMATSU, Mitsuyoshi, Tokyo 100-8332 (JP); TOKITA, Yuki, Tokyo 100-8332 (JP)
(74) Representative: Hoffmann Eitle
(86) International application number: PCT/JP2019/034979
(87) International publication number: WO 2021/044580

(56) References cited:
- CN-A- 103 884 778
- JP-A- 2008 528 971
- JP-A- 2017 032 367
- JP-A- H07 174 739
- JP-A- H09 264 885
- JP-A- S5 453 585
- JP-A- S6 293 658
- JP-B2- H06 100 577
- US-A1- 2006 043 660
- US-B1- 6 338 475

## Description

### Technical Field

The present disclosure relates to an ultrasonic flaw detection method and a non-claimed extension jig.

### Background Art

For example, structural components such as aircraft wings are formed of various composite materials. There is a case where the composite material is inspected by ultrasonic flaw detection during a manufacturing step in order to eliminate potential defects or maintain quality. An ultrasonic flaw detection system is disclosed in, for example, JP 2016 80405 A.

### Citation List

JP H09 264885 A and JP H06 100577 B2 disclose an ultrasonic flaw detection method and an extension jig with the precharacterizing features of the independent claims. In addition, US 6 338 475 B1 describes a bar clamp.

### Summary of Invention

### Technical Problem

Ultrasonic waves are totally reflected by an air layer, and therefore, in the ultrasonic flaw detection, ultrasonic waves are propagated to an object to be inspected through couplant such as water.

With respect to a composite material having a three-dimensional scan surface, there is a case where flaw detection is performed along the scan surface while pressing a probe against the scan surface in order to maintain a relative position between the scan surface and the probe. The probe has a search unit and a resin (wedge) integrated with the search unit, and couplant is contained in a space formed in the wedge.

At this time, the probe pressed against the scan surface is in a mechanically unstable pressing state (contact state) such as tilting occurring at an end portion of the object to be inspected (an end portion of the scan surface), so that there is a possibility that adhesion between the scan surface and the probe may decrease. Further, when the probe enters the scan surface, there is a possibility that the probe may collide with an end portion of the object to be inspected. In this way, there is a concern that the couplant may leak from the wedge, the ultrasonic waves from the search unit may not be appropriately propagated to the object to be inspected, or accurate flaw detection may be hindered at the end portion of the object to be inspected.

The present disclosure has been made in view of such circumstances, and has an object to provide an ultrasonic flaw detection method and an extension jig, in which flaw detection of a scan surface can be accurately performed even at an end portion of an object to be inspected.

### Solution to Problem

This object is solved by an ultrasonic flaw detection method with the features of claim 1. Preferred embodiments follow from the dependent claims.

As an example not belonging to the claimed invention, the ultrasonic flaw detection method is an ultrasonic flaw detection method in which flaw detection of a scan surface of an object to be inspected is performed by moving a probe that emits ultrasonic waves on the scan surface, the method including: a contact step of bringing an extension member having an extension surface flush with the scan surface into contact with an end portion of the object to be inspected in a moving direction of the probe; and a moving step of moving the probe over the scan surface and the extension surface.

As a further example not belonging to the claimed invention, the extension jig includes: an extension member that comes into contact with an end portion in a moving direction of a probe that emits ultrasonic waves, of an object to be inspected having a scan surface to be subjected to flaw detection by moving the probe, and has an extension surface flush with the scan surface; and a fixing jig that is connected to the extension member and is capable of being fixed to the object to be inspected.

### Advantageous Effects of Invention

According to the ultrasonic flaw detection method and the extension jig according to the present disclosure, the flaw detection of the scan surface can be accurately performed even at the end portion of the object to be inspected.

### Brief Description of Drawings

Fig. 1 is a perspective view showing an example of a composite material component.
Fig. 2 is a sectional view of a probe and the composite material component.
Fig. 3 is a perspective view showing the composite material component with an extension member connected thereto.
Fig. 4 is a perspective view showing the composite material component with the extension member connected thereto.
Fig. 5 is a perspective view showing an extension jig provided with a fixing jig according to a first embodiment.
Fig. 6 is a perspective view showing the composite material component to which the extension jig provided with the fixing jig according to the first embodiment is mounted.
Fig. 7 is a perspective view showing the composite material component with the extension member mounted thereto and the probe.
Fig. 8 is a plan view showing the composite material component with the extension jig mounted thereto.
Fig. 9 is a sectional view showing ridge portions of a pressing member.
Fig. 10 is a perspective view showing a fixing jig according to a second embodiment.
Fig. 11 is a perspective view showing the extension member and the composite material component fixed to each other by the fixing jig according to the second embodiment.
Fig. 12 is a perspective view showing the composite material component and the probe.
Fig. 13 is a perspective view showing a fixing jig according to a modification example of the second embodiment.
Fig. 14 is a plan view showing a fixing jig according to a third embodiment.
Fig. 15 is a front view showing the fixing jig according to the third embodiment.

### Description of Embodiments

### [First Embodiment]

Hereinafter, an ultrasonic flaw detection method and an extension jig according to a first embodiment of the present disclosure will be described using the drawings.

The ultrasonic flaw detection method of the present embodiment is a method of performing ultrasonic flaw detection on a composite material component (an object to be inspected) 80 made of a composite material such as carbon fiber reinforced plastic (CFRP). Further, an extension jig 30 of the present embodiment is a jig that is used, for example, when ultrasonic flaw detection is performed on the composite material component 80.

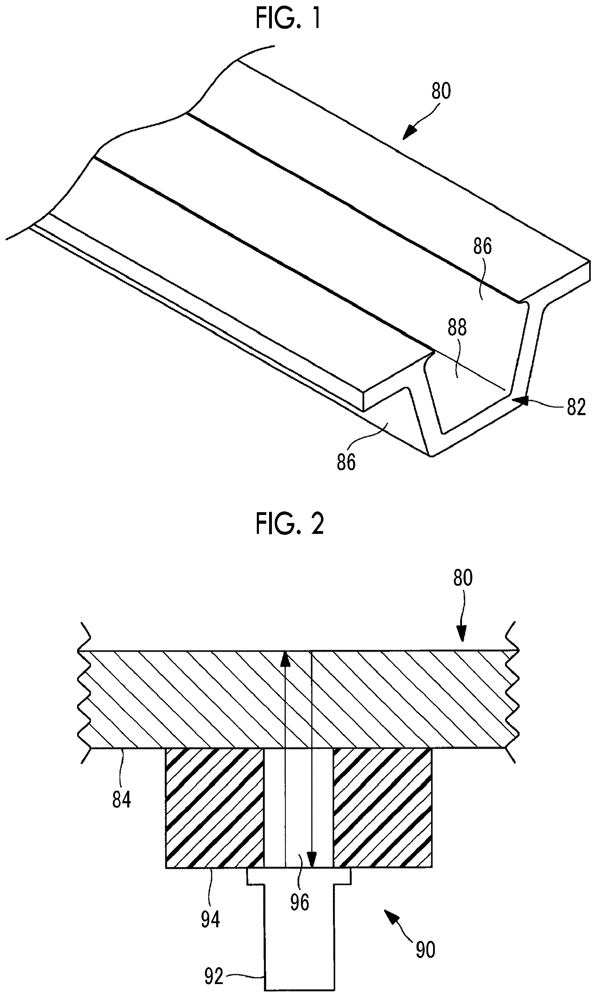

In Fig. 1, the composite material component 80 that is an inspection target for ultrasonic flaw detection is shown. The composite material component 80 is a long member having a hat-shaped cross section, which has two substantially L-shaped side wall portions 86 facing each other and one connection wall portion 88 connecting end portions of the side wall portions 86 to each other. The right front side on the paper surface of the composite material component 80 is an end surface 82 of the composite material component 80.

By moving a probe 90 as shown in Fig. 2 while pressing the probe 90 against any surface (a scan surface 84) formed on the composite material component 80, it is possible to carry out the flaw detection of the scan surface 84.

The shape of the composite material component 80 is not limited to the shape shown in the drawing, and as long as it is an object to be inspected on which a planar scan surface 84 is formed, any shape may be adopted.

In Fig. 2, the probe 90 pressed against the scan surface 84 is shown. The probe 90 includes a search unit 92 and a wedge 94 made of resin and mounted to an end portion of the search unit 92. A space is formed inside the wedge 94, and couplant 96 such as water is contained in the space. Ultrasonic waves (an arrow in the drawing) generated from the search unit 92 propagate to the composite material component 80 through the couplant 96. In this state, the flaw detection of the composite material component 80 is performed by moving the probe 90.

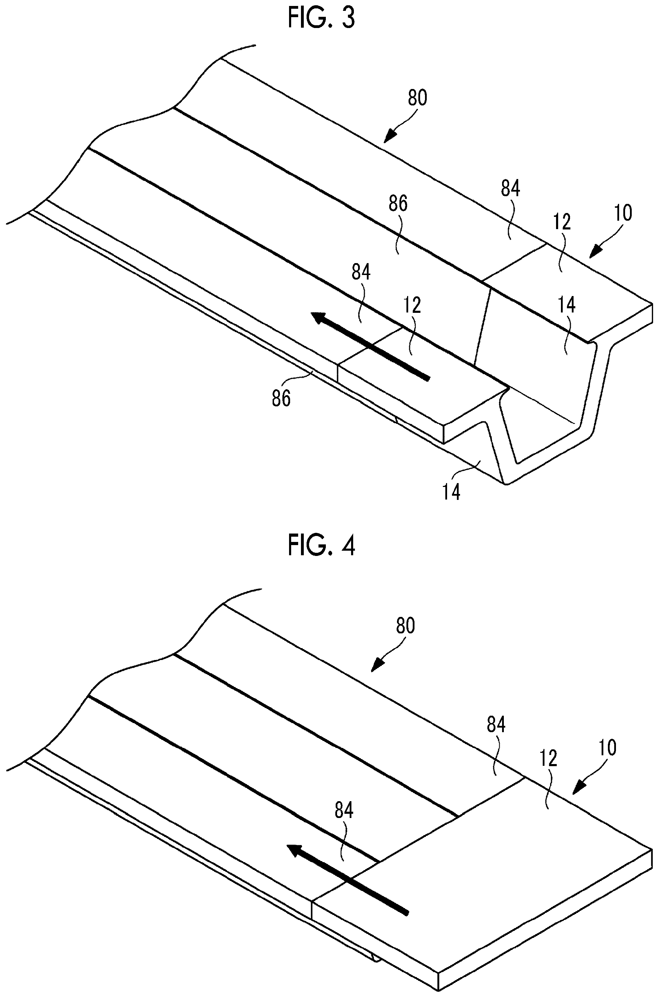

In Fig. 3, an extension member 10 mounted to the end surface 82 (refer to Fig. 1) formed at the end portion of the composite material component 80 is shown. The extension member 10 shown in Fig. 3 has a cross-sectional shape that substantially matches the cross-sectional shape of the composite material component 80, and by bringing the extension member 10 and the composite material component 80 into contact with each other such that the end surface of the extension member 10 and the end surface 82 of the composite material component 80 are in contact with each other (a contact step), it is possible to form an extension surface 12 flush with all the surfaces that can be the scan surface 84 in the composite material component 80. In the drawing, as an example, the upper surface of the composite material component 80 is set as the scan surface 84 and the upper surface of the extension member 10 is set as the extension surface 12. However, as long as it is a surface formed on the composite material component 80, any surface can be the scan surface 84.

By fixing the extension member 10 to the composite material component 80 in a state where the extension surface 12 is connected (a fixing step), it is possible to connect the extension surface 12 flush with all the surfaces that can be the scan surface 84 in the composite material component 80. The fixing of the composite material component 80 and the extension member 10 is performed by, for example, a fixing jig 20A (not shown), which will be described later.

As shown in Fig. 4, for example, when the upper surface of the composite material component 80 is the scan surface 84, the extension member 10 may be prepared such that the extension surface 12 is connected only to the scan surface 84. In short, the shape of the extension member 10 is not limited as long as it is the extension member 10 having the extension surface 12 flush with the scan surface 84 at the end portion of the composite material component 80.

The ultrasonic flaw detection in the present embodiment is carried out in a state where the extension surface 12 is connected to the scan surface 84 by the extension member 10. In particular, since it is possible to move the probe 90 over the scan surface 84 and the extension surface 12 which are flush with each other (a moving step), the probe 90 can be moved in a stable state even at the end portion of the composite material component 80. In a case where the extension surface 12 is not present, there is a possibility that the probe 90 may tilt at the end portion of the composite material component 80, and therefore, there is a concern that accurate flaw detection may be hindered.

Next, the fixing jig 20A for fixing the composite material component 80 and the extension member 10 will be described.

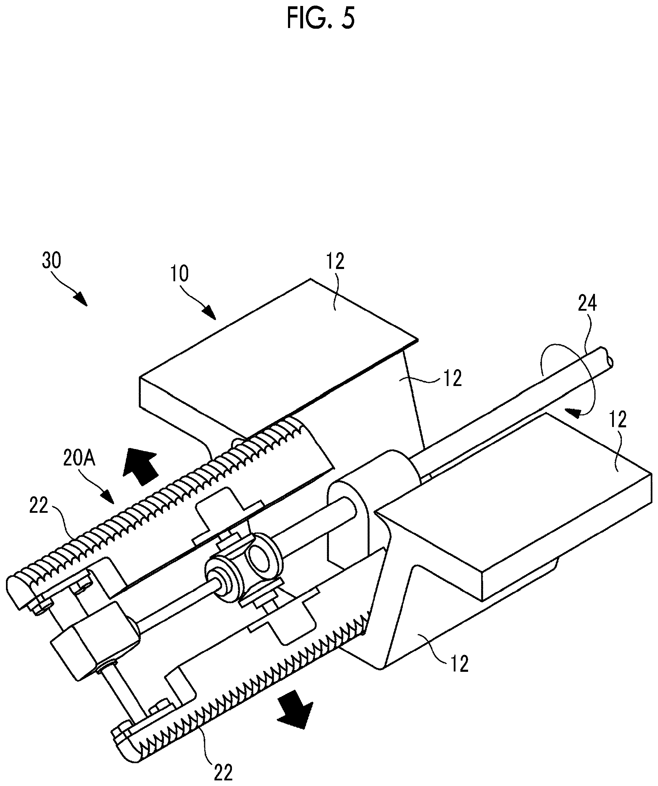

In Fig. 5, the fixing jig 20A is shown. In the present embodiment, the fixing jig 20A is connected to the extension member 10 to configure the extension jig 30.

The fixing jig 20A is provided with, for example, two pressing members 22 whose cross sections protrude from the end portion of the hat-shaped extension member 10 and which are long in an extension direction of the extension member 10. The two pressing members 22 are freely brought close to and separated from each other by a pressing member adjusting screw 24.

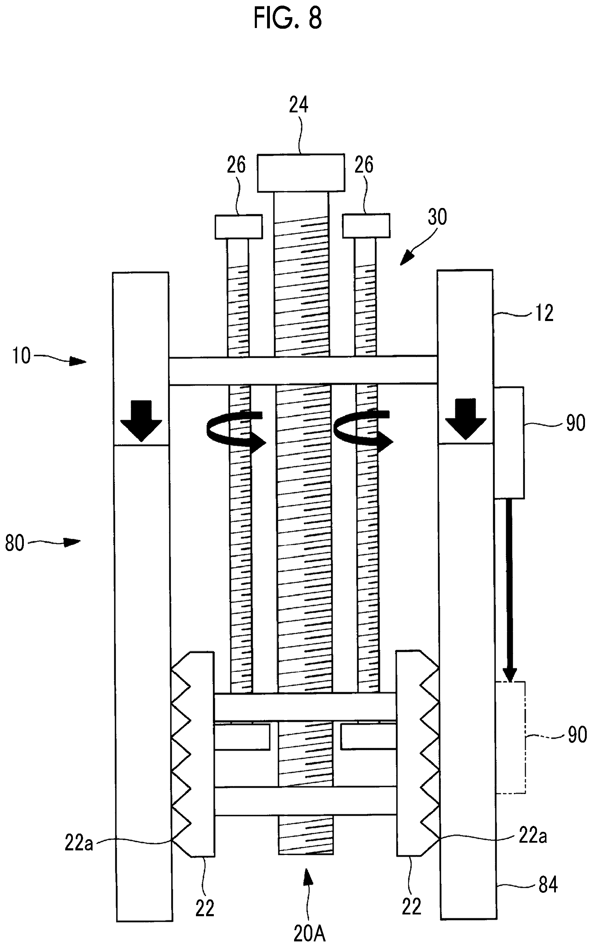

A head portion (for example, a portion that is gripped by an operator) of the pressing member adjusting screw 24 protrudes from the end portion of the extension member 10 (the end portion on the side opposite to the end portion where the pressing members 22 protrude) (refer to Fig. 8). In this way, the head portion of the pressing member adjusting screw 24 can be accessed from outside the extension member 10 or the composite material component 80. Therefore, even in a case where the open surface of the hat-shaped extension member 10 or the composite material component 80 is closed, it is possible to turn the pressing member adjusting screw 24.

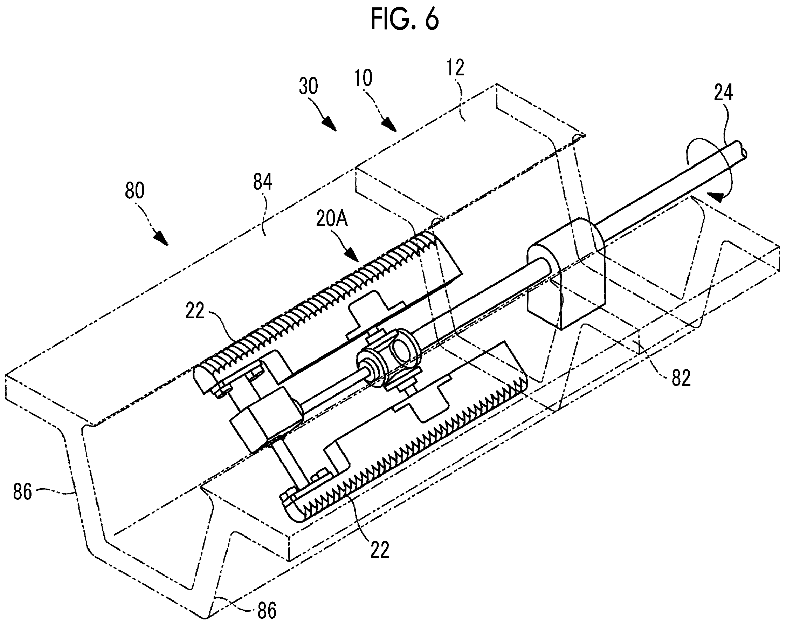

In Fig. 6, the composite material component 80 to which the extension jig 30 provided with the fixing jig 20A is mounted is shown. The two pressing members 22 are inserted inside the side wall portion 86 of the composite material component 80 having a hat-shaped cross section. At this time, the end surface of the extension member 10 and the end surface 82 of the composite material component 80 are brought into contact with each other such that the scan surface 84 and the extension surface 12 are flush with each other. In this state, the two pressing members 22 are moved in a direction in which they are separated from each other, by the pressing member adjusting screw 24. In this way, each of the pressing members 22 is pressed against each of the side wall portions 86, so that the fixing jig 20A is fixed to the composite material component 80. At the same time, the extension member 10 is fixed to the composite material component 80.

Instead of the fixing jig 20A, the extension member 10 may be fixed to the composite material component 80 by using an adhesive agent.

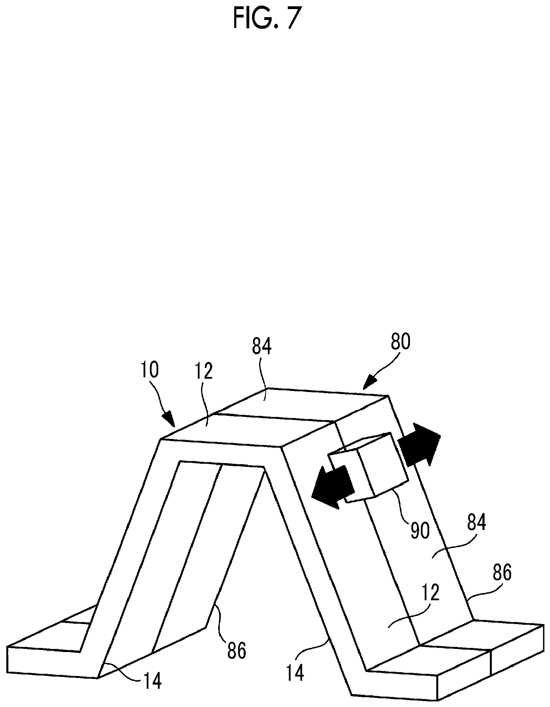

As shown in Fig. 7, in a state where the extension member 10 is fixed to the composite material component 80, the probe 90 is moved while being pressed against a predetermined scan surface 84. In this way, the probe 90 can be moved in a stable state even at the end portion of the composite material component 80. In the drawing, the fixing jig 20A is omitted.

The "predetermined scan surface 84" referred to here is a surface on the side where the pressing members 22 are not located, among the surfaces formed on the composite material component 80. In the case of the drawing, since the pressing members 22 are located inside the side wall portion 86, the scan surface 84 is the outer side of the side wall portion 86 or the outer side of the connection wall portion 88.

As shown in Fig. 8, in addition to the pressing member adjusting screw 24, the extension jig 30 may be provided with an extension member adjusting screw 26 that allows the pressing members 22 and the extension member 10 to be brought close to and separated from each other. In the case of the drawing, the extension member 10 can be brought close to and separated from the pressing members 22 along the extension direction of the composite material component 80. In this way, the extension member 10 can be further pressed against the composite material component 80 side.

A head portion (for example, a portion that is gripped by the operator) of the extension member adjusting screw 26 protrudes from the end portion of the extension member 10 (the end portion on the side opposite to the end portion where the pressing members 22 protrude). In this way, the head portion of the extension member adjusting screw 26 can be accessed from outside the extension member 10 or the composite material component 80. Therefore, even in a case where the open surface of the hat-shaped extension member 10 or the composite material component 80 is closed, it is possible to turn the pressing member adjusting screw 24.

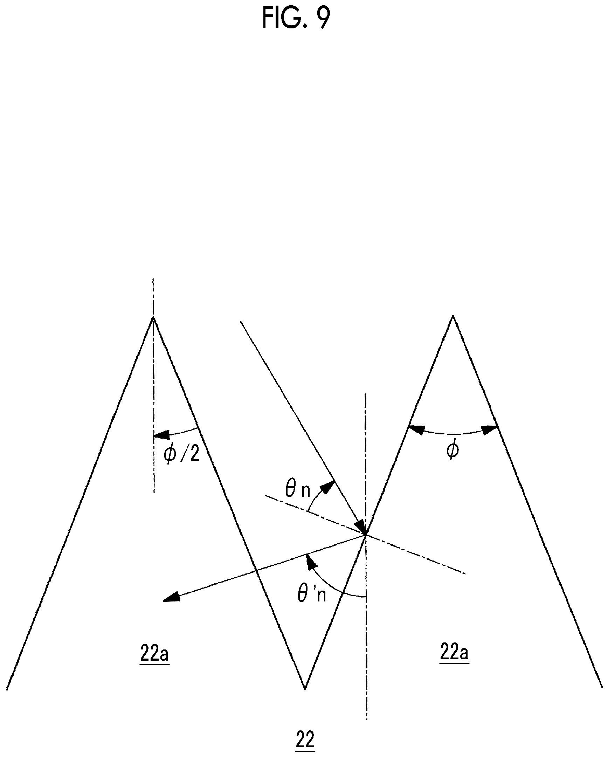

Further, it is preferable that the cross-sectional shape of the portion which comes into contact with the other party (in the case of the drawing, the inner side of the side wall portion 86), of the pressing member 22 has a shape in which a plurality of ridge portions 22a are continuous. With such a shape, as shown by an arrow in Fig. 9, even in a case where the ultrasonic waves propagate through the composite material component 80 to the pressing member 22 side, the ultrasonic waves enter a space (a valley portion) between the ridge portions 22a. In this way, the ultrasonic wave is reflected multiple times in the valley portion and attenuated. The number of times of reflection of the ultrasonic wave is preferably 4 times or more, for example.

When the number of times of reflection is n and the angle of an apex portion of the ridge portion 22a is φ, θn shown in the drawing is expressed by the expression, θn=90°-(2n-1)×φ, and θ'n shown in the drawing is expressed by the expression, θ'n=n×φ. From these relationships, the number of times of reflection n can be obtained.

According to the present embodiment, the following effects are obtained.

It is possible to create a state where the extension member 10 having the extension surface 12 flush with the scan surface 84 is brought into contact with the end portion of the composite material component 80 in the moving direction of the probe 90. That is, it is possible to create a state where the scan surface 84 of the composite material component 80 and the extension surface 12 of the extension member 10 are flush with each other and are connected to each other without a step. Since the probe 90 is moved in this state to detect flaws, the probe 90 can be moved in a stable state even at the end portion of the composite material component 80. In this way, the flaw detection of the scan surface 84 can be accurately performed even at the end portion of the composite material component 80.

Further, the composite material component 80 has the side wall portions 86 facing each other in the cross section viewed from the end portion side with which the extension member 10 comes into contact. At this time, the extension member 10 is fixed to the composite material component 80 through the fixing jig 20A by pressing the pressing members 22 of the fixing jig 20A, which is connected to the extension member 10 to be integrated with the extension member 10, against the inner side of the side wall portions 86 facing each other. In this way, the scan surface 84 of the composite material component 80 and the extension surface 12 of the extension member 10 can be connected without a step in a state of being flush with each other. In this way, the flaw detection of the scan surface 84 can be accurately performed even at the end portion of the composite material component 80.

Further, in the pressing member 22, the cross-sectional shape of the portion which comes into contact with the other party to be pressed has a shape in which the ridge portions 22a are continuous, and therefore, even if the ultrasonic waves that are emitted from the probe 90 propagate to a contact portion (a contact portion with the other party to be pressed), the ultrasonic waves enter a space (a valley portion) between the ridge portions 22a. In this way, the ultrasonic wave is reflected multiple times in the valley portion and attenuated. Therefore, the influence of the pressing member 22 on the ultrasonic flaw detection can be suppressed.

There is no limitation to the cross-sectional shape described above, and as long as it is a cross-sectional shape in which the entire surface of the pressing member 22 does not come into contact with the other party to be pressed, any cross-sectional shape may be adopted.

### [Second Embodiment]

Hereinafter, an ultrasonic flaw detection method and an extension jig according to a second embodiment of the present disclosure will be described using the drawings.

The present embodiment is different from the first embodiment in terms of the form of the fixing jig. Therefore, in the following description, the same configurations as those in the first embodiment are denoted by the same reference numerals, and different configurations will be described.

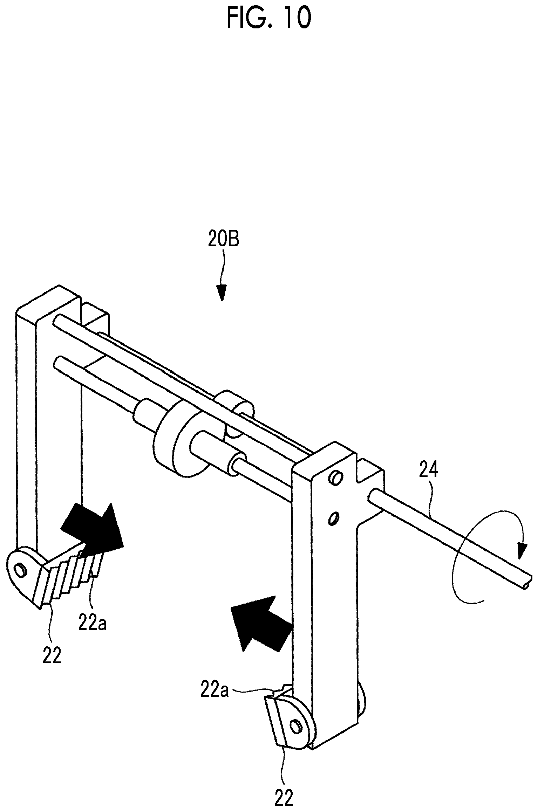

In Fig. 10, a fixing jig 20B is shown. In the drawing, the fixing jig 20B is not connected to the extension member 10. However, as in the fixing jig 20A of the first embodiment, the fixing jig 20B may be connected to the extension member 10 to configure the extension jig 30.

The fixing jig 20B is provided with two pressing members 22 each provided with a plurality of ridge portions 22a. The two pressing members 22 are freely brought close to and separated from each other by the pressing member adjusting screw 24.

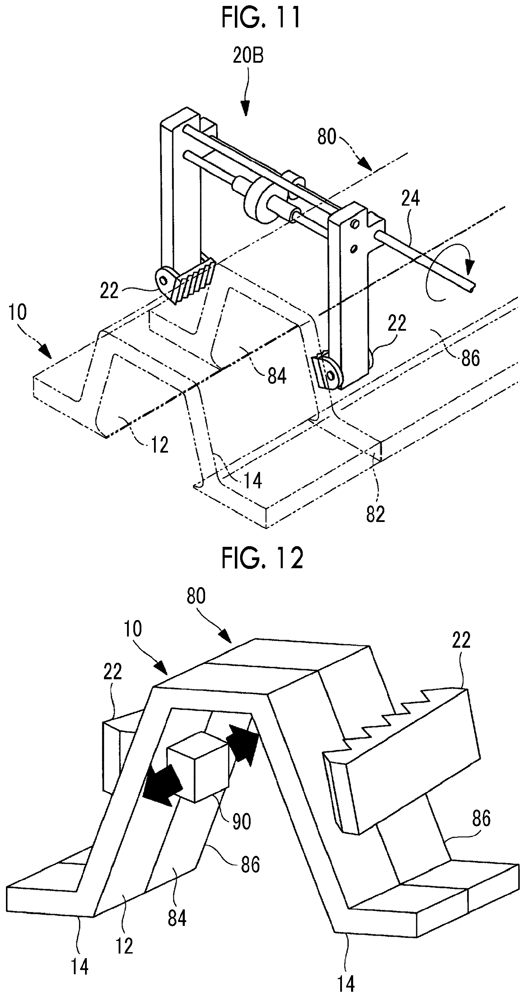

In Fig. 11, the composite material component 80 to which the extension member 10 is fixed by the fixing jig 20B is shown.

The extension member 10 has a hat shape whose cross-sectional shape corresponds to the cross-sectional shape of the composite material component 80, and has extension side wall portions 14 corresponding to the side wall portions 86 of the composite material component 80. The outer surface of the extension side wall portion 14 becomes flush with the outer surface of the side wall portion 86 of the composite material component 80.

Each of the two pressing members 22 is located outside each of the side wall portions 86 of the composite material component 80 and each of the extension side wall portions 14 of the extension member 10 and at a portion extending over the composite material component 80 and the extension member 10 (the boundary between the composite material component 80 and the extension member 10). The extension member 10 has the same cross-sectional shape as the composite material component 80, and the end surface of the extension member 10 and the end surface 82 of the composite material component 80 are brought into contact with each other such that the scan surface 84 and the extension surface 12 are flush with each other. In this state, the two pressing members 22 are moved in a direction in which they approach each other, by the pressing member adjusting screw 24. In this way, each of the pressing members 22 is pressed against each of the side wall portions 86 and each of the extension side wall portions 14, and the extension member 10 is fixed to the composite material component 80.

As shown in Fig. 12, in a state where the extension member 10 is fixed to the composite material component 80, the probe 90 is moved while being pressed against a predetermined scan surface 84. In this way, the probe 90 can be moved in a stable state even at the end portion of the composite material component 80. In the drawing, a part of the fixing jig 20B is omitted.

The "predetermined scan surface 84" referred to here is a surface on the side where the pressing members 22 are not located, among the surfaces formed on the composite material component 80. In the case of the drawing, since the pressing member 22 is located outside the side wall portion 86, the scan surface 84 is the inner side of the side wall portion 86 or the inner side of the connection wall portion 88.

According to the present embodiment, the following effects are obtained.

The composite material component 80 has the side wall portions 86 facing each other in the cross section viewed from the end portion side with which the extension member 10 comes into contact. Further, the extension member 10 has the extension side wall portions 14 which are flush with the outer surfaces of the side wall portions 86. Then, the extension member 10 is fixed to the composite material component 80 by pressing the pressing members of the fixing jig against the outer side of the side wall portions 86 of the composite material component 80 and the extension side wall portions 14 of the extension member 10. In this way, the scan surface 84 of the composite material component 80 and the extension surface 12 of the extension member 10 can be connected without a step in a state of being flush with each other. In this way, the flaw detection of the scan surface 84 can be accurately performed even at the end portion of the composite material component 80.

### [Modification Example]

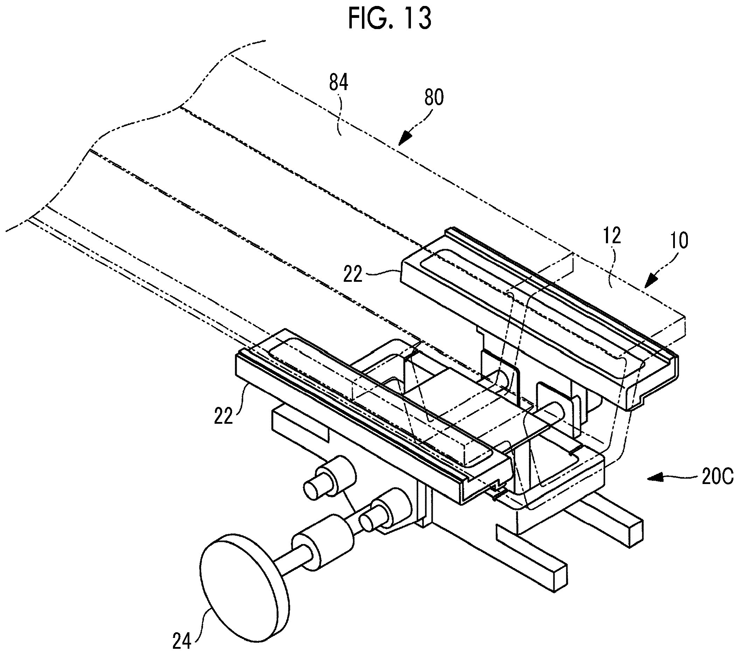

In Fig. 13, the composite material component 80 to which the extension member 10 is fixed by a fixing jig 20C is shown. Similar to the fixing jig 20B, in the fixing jig 20C, the two pressing members 22 can be moved in a direction in which they approach each other from outside the side wall portions 86 of the composite material component 80 and the extension side wall portions 14 of the extension member 10 and at a portion extending over the composite material component 80 and the extension member 10. The movement of the two pressing members 22 is performed by the pressing member adjusting screw 24.

### [Third Embodiment]

Hereinafter, an ultrasonic flaw detection method and an extension jig according to a third embodiment of the present disclosure will be described using the drawings.

The present embodiment is different from each of the above embodiments in terms of the forms of the composite material component and the fixing jig. Therefore, in the following description, the same configurations as those in each of the above embodiments are denoted by the same reference numerals, and different configurations will be described.

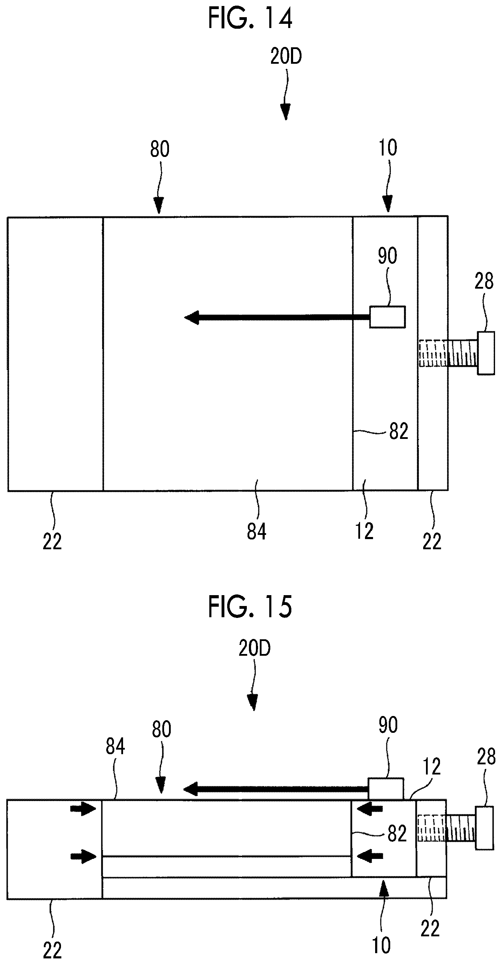

In Figs. 14 and 15, a flat plate-shaped composite material component 80 to which the extension member 10 is connected by a fixing jig 20D is shown.

The fixing jig 20D is provided with two pressing members 22. The two pressing members 22 are located on both end sides of the composite material component 80 (for example, both end sides in a right-left direction on the paper surface in Fig. 14).

A pushing bolt 28 is screwed to one pressing member 22 (in the drawing, the pressing member 22 on the right side) from the outside toward the inside.

An extension member 10 having a rectangular columnar shape is installed between one end (in the drawing, the right end) of the composite material component 80 and one pressing member 22, and when the upper surface of the composite material component 80 shown in Fig. 14 is set to be the scan surface 84, the upper surface of the extension member 10 is configured to be the extension surface 12. At this time, the end surface of the extension member 10 and the end surface 82 of the composite material component 80 are brought into contact with each other such that the scan surface 84 and the extension surface 12 are flush with each other, and in this state, the extension member 10 is pushed by the pushing bolt 28 in a direction in which it approaches the composite material component 80. In this way, the extension member 10 is fixed to the composite material component 80.

As shown in Figs. 14 and 15, in a state where the extension member 10 is fixed to the composite material component 80, the probe 90 is moved while being pressed against the scan surface 84. In this way, since the probe 90 can be moved in a stable state even at the end portion of the composite material component 80, the flaw detection of the scan surface 84 can be accurately performed.

According to the present embodiment, the following effects are obtained.

The fixing jig 20D clamps the composite material component 80 and the extension member 10 to fix the extension member 10 to the composite material component 80. In this way, the scan surface 84 of the composite material component 80 and the extension surface 12 of the extension member 10 can be connected without a step in a state of being flush with each other. In this way, the probe 90 can be moved in a stable state even at the end portion of the composite material component 80. In this way, the flaw detection of the scan surface 84 can be accurately performed even at the end portion of the composite material component 80.

The ultrasonic flaw detection method and the extension jig described in each embodiment are grasped as follows, for example.

The ultrasonic flaw detection method according to an aspect of the present disclosure is an ultrasonic flaw detection method in which flaw detection of a scan surface (84) of an object to be inspected (80) is performed by moving a probe (90) that emits ultrasonic waves on the scan surface (84), the method including: a contact step of bringing an extension member (10) having an extension surface (12) flush with the scan surface (84) into contact with an end portion of the object to be inspected (80) in a moving direction of the probe (90); and a moving step of moving the probe (90) over the scan surface (84) and the extension surface (12).

According to the ultrasonic flaw detection method according to this aspect, it is possible to create a state where the extension member (10) having the extension surface (12) flush with the scan surface (84) is brought into contact with the end portion of the object to be inspected (80) in the moving direction of the probe (90). That is, it is possible to create a state where the scan surface (84) of the object to be inspected (80) and the extension surface (12) of the extension member (10) are flush with each other and are connected without a step. Since the probe (90) is moved in this state to detect flaws, the probe (90) can be moved in a stable state even at the end portion of the object to be inspected (80). In this way, the flaw detection of the scan surface (84) can be accurately performed even at the end portion of the object to be inspected (80).

As the object to be inspected (80), for example, a composite material component made of a composite material such as carbon fiber reinforced plastic (CFRP) is adopted.

Further, the ultrasonic flaw detection method according to an aspect of the present disclosure further includes a fixing step of fixing the object to be inspected (80) and the extension member (10) by a fixing jig (20A) such that the scan surface (84) and the extension surface (12) are flush with each other, in which the object to be inspected (80) has side wall portions (86) facing each other in the cross section viewed from the end portion side, the fixing jig (20A) is connected to the extension member (10), the fixing jig (20A) has a pressing member (22) capable of pressing each of the side wall portions (86) from the inside, and is fixed to the object to be inspected (80) by the pressing member (22), and the probe (90) is moved on the outer side of each of the side wall portions (86) in the moving step.

According to the ultrasonic flaw detection method according to this aspect, the object to be inspected (80) has the side wall portions (86) facing each other in the cross section viewed from the end portion side with which the extension member (10) comes into contact. Then, the extension member (10) is fixed to the object to be inspected (80) through the fixing jig (20A) integrated with the extension member (10) by pressing the pressing member (22) of the fixing jig (20A) against the inner side of each of the side wall portions (86) facing each other. In this way, the scan surface (84) of the object to be inspected (80) and the extension surface (12) of the extension member (10) can be connected without a step in a state of being flush with each other.

Further, the ultrasonic flaw detection method according to an aspect of the present disclosure further includes a fixing step of fixing the object to be inspected (80) and the extension member (10) by a fixing jig (20B, 20C) such that the scan surface (84) and the extension surface (12) are flush with each other, in which the object to be inspected (80) has side wall portions (86) facing each other in the cross section viewed from the end portion side, the extension member(10) has an extension side wall portion (14) flush with an outer surface of each of the side wall portions (86), the fixing jig (20B, 20C) has a pressing member (22) capable of pressing the side wall portion (86) and the extension side wall portion (14) from the outside, the extension member (10) and the object to be inspected (80) are fixed to each other by the pressing member (22), and the probe (90) is moved on the inner side of each of the side wall portions (86) in the moving step.

According to the ultrasonic flaw detection method according to this aspect, the object to be inspected (80) has the side wall portions (86) facing each other in the cross section viewed from the end portion side with which the extension member (10) comes into contact. Further, the extension member (10) has the extension side wall portion (14) flush with the outer surface of each of the side wall portions (86). Then, the extension member (10) is fixed to the object to be inspected (80) by pressing the pressing member (22) of the fixing jig (20B, 20C) against the outer side of each of the side wall portions (86) of the object to be inspected (80) and each of the extension side wall portions (14) of the extension member (10). In this way, the scan surface (84) of the object to be inspected (80) and the extension surface (12) of the extension member (10) can be connected without a step in a state of being flush with each other.

Further, the ultrasonic flaw detection method according to an aspect of the present disclosure further includes a fixing step of fixing the object to be inspected (80) and the extension member (10) by a fixing jig (20B, 20C) such that the scan surface (84) and the extension surface (12) are flush with each other, in which the object to be inspected (80) has side wall portions (86) facing each other in the cross section viewed from the end portion side, the fixing jig (20B, 20C) is connected to the extension member (10), the fixing jig (20B, 20C) has a pressing member (22) capable of pressing each of the side wall portions (86) from the outside and is fixed to the object to be inspected (80) by the pressing member (22), and the probe (90) is moved on the inner side of each of the side wall portions (86) in the moving step.

According to the ultrasonic flaw detection method according to this aspect, the object to be inspected (80) has the side wall portions (86) facing each other in the cross section viewed from the end portion side with which the extension member (10) comes into contact. Then, the extension member (10) is fixed to the object to be inspected (80) through the fixing jig (20B, 20C) integrated with the extension member (10) by pressing the pressing member (22) of the fixing jig (20B, 20C) against the outer side of each of the side wall portions (86) facing each other. In this way, the scan surface (84) of the object to be inspected (80) and the extension surface (12) of the extension member (10) can be connected without a step in a state of being flush with each other.

Further, in the ultrasonic flaw detection method according to an aspect of the present disclosure, in the pressing member (22), a cross-sectional shape of a portion which comes into contact with the other party to be pressed has a shape in which ridge portions (22a) are continuous.

According to the ultrasonic flaw detection method according to this aspect, in the pressing member (22), the cross-sectional shape of the portion which comes into contact with the other party to be pressed has a shape in which the ridge portions (22a) are continuous, and therefore, even if the ultrasonic waves that are emitted from the probe (90) propagate to a contact portion (a contact portion with the other party to be pressed), the ultrasonic waves enter a space (a valley portion) between the ridge portions (22a). In this way, the ultrasonic wave is reflected multiple times in the valley portion and attenuated. Therefore, the influence of the pressing member (22) on the ultrasonic flaw detection can be suppressed.

There is no limitation to the cross-sectional shape described above, and as long as it is a cross-sectional shape in which the entire surface of the pressing member (22) does not come into contact with the other party to be pressed, any cross-sectional shape may be adopted.

Further, the ultrasonic flaw detection method according to an aspect of the present disclosure further includes a fixing step of fixing the object to be inspected (80) and the extension member (10) by a fixing jig (20D) such that the scan surface (84) and the extension surface (12) are flush with each other, in which the fixing jig (20D) clamps the object to be inspected (80) and the extension member (10).

According to the ultrasonic flaw detection method according to this aspect, the fixing jig (20D) clamps the object to be inspected (80) and the extension member (10) to fix the extension member (10) to the object to be inspected (80). In this way, the scan surface (84) of the object to be inspected (80) and the extension surface (12) of the extension member (10) can be connected without a step in a state of being flush with each other.

The extension jig (30) according to another aspect of the present disclosure includes an extension member (10) that comes into contact with an end portion in a moving direction of a probe (90), of an object to be inspected (80) having a scan surface (84) to be subjected to flaw detection by moving the probe (90) that emits ultrasonic waves, and has an extension surface (12) flush with the scan surface (84); and a fixing jig (20A, 20B, 20C) that is connected to the extension member (10) and is capable of being fixed to the object to be inspected.

According to the extension jig (30) according to this aspect, it is possible to create a state where the extension member (10) having the extension surface (12) flush with the scan surface (84) is brought into contact with the end portion of the object to be inspected (80) in the moving direction of the probe (90). That is, it is possible to create a state where the scan surface (84) of the object to be inspected (80) and the extension surface (12) of the extension member (10) are flush with each other and are connected without a step. The probe (90) is moved in this state to detect flaws, so that the probe (90) can be moved in a stable state even at the end portion of the object to be inspected (80). In this way, the flaw detection of the scan surface (84) can be accurately performed even at the end portion of the object to be inspected (80).

Further, in the extension jig (30) according to another aspect of the present disclosure, the fixing jig (20A) has a pressing member (22) capable of pressing, from the inside, each of side wall portions (86) facing each other in the cross section of the object to be inspected (80) viewed from the end portion side, and is fixed to the object to be inspected (80) by the pressing member (22).

According to the extension jig (30) according to this aspect, in a case where the object to be inspected (80) has the side wall portions (86) facing each other in the cross section viewed from the end portion side with which the extension member (10) comes into contact, the extension member (10) is fixed to the object to be inspected (80) through the fixing jig (20A) integrated with the extension member (10) by pressing the pressing member (22) of the fixing jig (20A) against the inner side of each of the side wall portions (86) facing each other. In this way, the scan surface (84) of the object to be inspected (80) and the extension surface (12) of the extension member (10) can be connected without a step in a state of being flush with each other.

Further, in the extension jig (30) according to an aspect of the present disclosure, the fixing jig (20B, 20C) has a pressing member (22) capable of pressing, from the outside, each of side wall portions (86) facing each other in the cross section of the object to be inspected (80) viewed from the end portion side, and is fixed to the object to be inspected (80) by the pressing member (22).

According to the extension jig (30) according to this aspect, in a case where the object to be inspected (80) has the side wall portions (86) facing each other in the cross section viewed from the end portion side with which the extension member (10) comes into contact, the extension member (10) is fixed to the object to be inspected (80) through the fixing jig (20B, 20C) integrated with the extension member (10) by pressing the pressing member (22) of the fixing jig (20B, 20C) against the outer side of each of the side wall portions (86) facing each other. In this way, the scan surface (84) of the object to be inspected (80) and the extension surface (12) of the extension member (10) can be connected without a step in a state of being flush with each other.

### Reference Signs List

- 10:: extension member
- 12:: extension surface
- 14:: extension side wall portion
- 20A, 20B, 20C, 20D:: fixing jig
- 22:: pressing member
- 22a:: ridge portion
- 24:: pressing member adjusting screw
- 26:: extension member adjusting screw
- 28:: pushing bolt
- 30:: extension jig
- 80:: composite material component (object to be inspected)
- 82:: end surface
- 84:: scan surface
- 86:: side wall portion
- 88:: connection wall portion
- 90:: probe
- 92:: search unit
- 94:: wedge
- 96:: couplant

## Claims

1. An ultrasonic flaw detection method in which flaw detection of a scan surface (84) of an object to be inspected is performed by moving a probe (90) that emits ultrasonic waves on the scan surface, the method comprising:
a contact step of bringing an extension member (10) having an extension surface (12) flush with the scan surface into contact with an end portion of the object to be inspected in a moving direction of the probe; and
a moving step of moving the probe over the scan surface and the extension surface;
**characterized in that**
the method further comprises:
a fixing step of fixing the object to be inspected and the extension member by a fixing jig (20A, 20B, 20C, 20D) such that the scan surface and the extension surface are flush with each other.

2. The ultrasonic flaw detection method according to claim 1,
wherein the object to be inspected has side wall portions (86) facing each other in a cross section viewed from an end portion side,
the fixing jig is connected to the extension member,
the fixing jig has a pressing member (22) capable of pressing each of the side wall portions from an inside, and is fixed to the object to be inspected by the pressing member, and
the probe is moved on an outer side of each of the side wall portions in the moving step.

3. An ultrasonic flaw detection method according to claim 1,
wherein the object to be inspected has side wall portions (86) facing each other in a cross section viewed from an end portion side,
the extension member has an extension side wall portion flush with an outer surface of each of the side wall portions,
the fixing jig has a pressing member (22) capable of pressing the side wall portion and the extension side wall portion from an outside,
the extension member and the object to be inspected are fixed to each other by the pressing member, and
the probe is moved on an inner side of each of the side wall portions in the moving step.

4. An ultrasonic flaw detection method according to claim 1,
wherein the object to be inspected has side wall portions (86) facing each other in a cross section viewed from an end portion side,
the fixing jig is connected to the extension member,
the fixing jig has a pressing member capable of pressing each of the side wall portions from an outside and is fixed to the object to be inspected by the pressing member, and
the probe is moved on an inner side of each of the side wall portions in the moving step.

5. The ultrasonic flaw detection method according to any one of claims 1 to 4, wherein in the pressing member, a cross-sectional shape of a portion which comes into contact with the other party to be pressed has a shape in which ridge portions (22a) are continuous.

6. An ultrasonic flaw detection method according to claim 1,
wherein the fixing jig clamps the object to be inspected and the extension member.

## Patentansprüche

1. Verfahren zur Ultraschallfehlerdetektion, bei dem Fehlerdetektion einer Scan-Oberfläche (84) eines zu überprüfenden Objekts durch Bewegen einer Sonde (90), die Ultraschallwellen aussendet, auf der Scan-Oberfläche durchgeführt wird, wobei das Verfahren umfasst:
einen Kontaktschritt des Bringens eines Verlängerungselements (10), das eine Verlängerungsoberfläche (12) aufweist, die mit der Scan-Oberfläche bündig ist, in Kontakt mit einem Endabschnitt des zu überprüfenden Objekts in einer Bewegungsrichtung der Sonde; und
einen Bewegungsschritt des Bewegens der Sonde über die Scan-Oberfläche und die Verlängerungsoberfläche;
**dadurch gekennzeichnet, dass**
das Verfahren weiter Folgendes umfasst:
einen Befestigungsschritt des Befestigens des zu überprüfenden Objekts und des Verlängerungselements durch eine Befestigungsvorrichtung (20A, 20B, 20C, 20D), sodass die Scan-Oberfläche und die Verlängerungsoberfläche bündig zueinander sind.

2. Verfahren zur Ultraschallfehlerdetektion nach Anspruch 1,
wobei das zu überprüfende Objekt Seitenwandabschnitte (86) aufweist, die in einem Querschnitt von einer Endabschnittsseite betrachtet einander zugewandt sind,
die Befestigungsvorrichtung mit dem Verlängerungselement verbunden ist,
die Befestigungsvorrichtung ein Drückelement (22) aufweist, das imstande ist, jeden der Seitenwandabschnitte von einer Innenseite zu drücken, und durch das Drückelement an dem zu überprüfenden Objekt befestigt ist, und
die Sonde im Bewegungsschritt auf einer äußeren Seite jedes der Seitenwandabschnitte bewegt wird.

3. Verfahren zur Ultraschallfehlerdetektion nach Anspruch 1,
wobei das zu überprüfende Objekt Seitenwandabschnitte (86) aufweist, die in einem Querschnitt von einer Endabschnittsseite betrachtet einander zugewandt sind,
das Verlängerungselement einen Verlängerungsseitenwandabschnitt aufweist, der mit einer Außenfläche jedes der Seitenwandabschnitte bündig ist,
die Befestigungsvorrichtung ein Drückelement (22) aufweist, das imstande ist, den Seitenwandabschnitt und den Verlängerungsseitenwandabschnitt von einer Außenseite zu drücken,
das Verlängerungselement und das zu überprüfende Objekt durch das Drückelement aneinander befestigt sind, und
die Sonde im Bewegungsschritt auf einer inneren Seite jedes der Seitenwandabschnitte bewegt wird.

4. Verfahren zur Ultraschallfehlerdetektion nach Anspruch 1,
wobei das zu überprüfende Objekt Seitenwandabschnitte (86) aufweist, die in einem Querschnitt von einer Endabschnittsseite betrachtet einander zugewandt sind,
die Befestigungsvorrichtung mit dem Verlängerungselement verbunden ist,
die Befestigungsvorrichtung ein Drückelement aufweist, das imstande ist, jeden der Seitenwandabschnitte von einer Außenseite zu drücken, und durch das Drückelement an dem zu überprüfenden Objekt befestigt ist, und
die Sonde im Bewegungsschritt auf einer inneren Seite jedes der Seitenwandabschnitte bewegt wird.

5. Verfahren zur Ultraschallfehlerdetektion nach einem der Ansprüche 1 bis 4, wobei im Drückelement eine Querschnittsform eines Abschnitts, der mit der anderen Partei, die zu drücken ist, in Kontakt kommt, eine Form aufweist, bei der Rippenabschnitte (22a) durchgehend sind.

6. Verfahren zur Ultraschallfehlerdetektion nach Anspruch 1,
wobei die Befestigungsvorrichtung das zu überprüfende Objekt und das Verlängerungselement einspannt.

## Revendications

1. Procédé de détection de défauts par ultrasons dans lequel la détection de défauts d'une surface (84) de balayage d'un objet à inspecter est réalisée en déplaçant une sonde (90) qui émet des ondes ultrasoniques sur la surface de balayage, le procédé comprenant :
une étape de contact consistant à amener un élément (10) d'extension présentant une surface (12) d'extension qui est à niveau avec la surface de balayage en contact avec une partie d'extrémité de l'objet à inspecter dans une direction de déplacement de la sonde ; et
une étape de déplacement consistant à déplacer la sonde sur la surface de balayage et la surface d'extension ;
**caractérisé en ce que**
le procédé comprend en outre :
une étape de fixation consistant à fixer l'objet à inspecter et l'élément d'extension à l'aide d'un appareil (20A, 20B, 20C, 20D) de fixation de manière à ce que la surface de balayage et la surface d'extension soient parfaitement à niveau l'une par rapport à l'autre.

2. Procédé de détection de défauts par ultrasons selon la revendication 1,
dans lequel l'objet à inspecter présente des parties (86) de parois latérales faisant face l'une à l'autre dans une section transversale vue depuis le côté d'une partie d'extrémité,
l'appareil de fixation est relié à l'élément d'extension,
l'appareil de fixation présente un élément (22) de pression capable de presser chacune des parties de paroi latérale de l'intérieur, et est fixé à l'objet à inspecter par cet élément de pression, et
la sonde est déplacée sur un côté extérieur de chacune des parties de paroi latérale dans l'étape de déplacement.

3. Procédé de détection de défauts par ultrasons selon la revendication 1,
dans lequel l'objet à inspecter présente des parties (86) de parois latérales faisant face l'une à l'autre dans une section transversale vue depuis le côté d'une partie d'extrémité,
l'élément d'extension présente une partie de paroi latérale d'extension à niveau avec une surface extérieure de chacune des parties de paroi latérale,
l'appareil de fixation présente un élément (22) de pression capable de presser la partie de paroi latérale et la partie de paroi latérale d'extension depuis l'extérieur,
l'élément d'extension et l'objet à inspecter sont fixés l'un à l'autre par l'élément de pression, et
la sonde est déplacée sur un côté intérieur de chacune des parties de paroi latérale dans l'étape de déplacement.

4. Procédé de détection de défauts par ultrasons selon la revendication 1,
dans lequel l'objet à inspecter présente des parties (86) de parois latérales faisant face l'une à l'autre dans une section transversale vue depuis le côté d'une partie d'extrémité,
l'appareil de fixation est relié à l'élément d'extension,
l'appareil de fixation présente un élément de pression capable de presser chacune des parties de paroi latérale depuis l'extérieur et est fixé à l'objet à inspecter par cet élément de pression, et
la sonde est déplacée sur un côté intérieur de chacune des parties de paroi latérale dans l'étape de déplacement.

5. Procédé de détection de défauts par ultrasons selon l'une quelconque des revendications 1 à 4, dans lequel dans l'élément de pression, une forme de section transversale d'une partie qui entre en contact avec l'autre partie à presser présente une forme dans laquelle des parties (22a) de crête sont continues.

6. Procédé de détection de défauts par ultrasons selon la revendication 1,
dans lequel l'appareil de fixation maintient l'objet à inspecter et l'élément d'extension.
